# EUROPEAN PATENT APPLICATION

(11) **EP 4 711 155 A1**
(43) Date of publication of application: **18.03.2026**
(21) Application number: 25195652.0
(22) Date of filing: 13.08.2025
(51) Int. Cl.: B60C 15/06

(54) **HEAVY DUTY TIRE**

(30) Priority: 13.09.2024 JP 2024159031
(71) Applicant: Sumitomo Rubber Industries, Ltd., Kobe-shi, Hyogo 651-0072 (JP)
(72) Inventor: OJI, Takuya, Kobe-shi, 651-0072 (JP)
(74) Representative: Manitz Finsterwald Patent- und Rechtsanwaltspartnerschaft mbB

(57) **Abstract**

Provided is a heavy duty tire 2 that can achieve weight reduction while maintaining good durability. The tire 2 includes a carcass 12, a pair of sidewalls 6, a pair of chafers 8, and a pair of reinforcement layers 22. The carcass 12 includes a carcass ply 38. The carcass ply 38 includes a ply body 40 and a pair of turned-up portions 42. Each of the reinforcement layers 22 includes a fiber reinforcement layer 48. The fiber reinforcement layer 48 is composed of one fiber reinforcement ply 52. Each sidewall 6 and each chafer 8 are joined at a boundary 54 extending between a radially inner end SU of the sidewall 6 and a radially outer end CG of the chafer 8. The chafer 8 covers the radially inner end SU of the sidewall 6. The sidewall 6 is softer than the chafer 8.

## Description

### BACKGROUND OF THE INVENTION

### Field of the Invention

The present invention relates to a heavy duty tire.

### Background Art

Heavy duty tires mounted on vehicles such as trucks and buses support large loads. A large load acts on each bead portion of such a tire. To prevent damage to the bead portion and improve the durability of the tire, it has been proposed to provide a reinforcement layer in the bead portion.

For example, each bead portion of a tire disclosed in Japanese Laid-Open Patent Publication No. 2009-101943 includes an inner reinforcement layer embedded with steel cords and a two-layer outer reinforcement layer embedded with organic fiber cords.

An object of the present invention is to provide a heavy duty tire that can achieve weight reduction while maintaining good durability.

### SUMMARY OF THE INVENTION

A heavy duty tire according to the present invention includes a pair of beads, a carcass extending on and between the pair of beads, a pair of sidewalls located axially outward of the carcass, a pair of chafers each located radially inward of the sidewall and configured to come into contact with a rim, and a pair of reinforcement layers each located between the carcass and the chafer. Each of the beads includes a core and an apex located radially outward of the core. The carcass includes a carcass ply. The carcass ply includes a ply body extending between the pair of beads and a pair of turned-up portions connected to the ply body and turned up around the beads. Each of the reinforcement layers includes a fiber reinforcement layer located axially outward of the turned-up portion. The fiber reinforcement layer is composed of one fiber reinforcement ply including a large number of fiber reinforcement cords aligned with each other. The fiber reinforcement cords are organic fiber cords. Each sidewall and each chafer are joined at a boundary extending between a radially inner end of the sidewall and a radially outer end of the chafer. The chafer covers the radially inner end of the sidewall. The sidewall is softer than the chafer.

The present invention can provide a heavy duty tire that can achieve weight reduction while maintaining good durability.

### BRIEF DESCRIPTION OF THE DRAWINGS

FIG. 1 is a cross-sectional view showing a part of a heavy duty tire according to an embodiment of the present invention;
FIG. 2 is a cross-sectional view showing a part of the tire in FIG. 1;
FIG. 3 is a cross-sectional view showing a part of the tire that is not fitted on a rim;
FIG. 4 illustrates a carcass cord, a metal reinforcement cord, and a fiber reinforcement cord in a bead portion; and
FIG. 5 is a graph showing the relationship between an angle of the fiber reinforcement cord and strain at an end of a turned-up portion.

### DETAILED DESCRIPTION

Hereinafter, the present invention will be described in detail based on a preferred embodiment with appropriate reference to the drawings.

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a 100% modulus means a stress at 100% elongation. The 100% modulus of a component formed from a crosslinked rubber, of the components included in the tire, is measured at a temperature of 23°C in accordance with the standards of JIS K6251 using a tensile tester.

In this measurement, a strip piece (a length of 35 mm × a width of 6 mm × a thickness of 1 mm) is sampled from the tire, and a dumbbell test piece is prepared using this strip piece. The length direction of the test strip is caused to coincide with the circumferential direction of the tire. If a strip piece cannot be sampled from the tire, a dumbbell test piece is prepared from a sheet-shaped crosslinked rubber (hereinafter also referred to as rubber sheet) obtained by pressurizing and heating a rubber composition, which is used for forming a component to be measured, at 170°C for 12 minutes.

In the present invention, the loss tangent (tan δ) of a component formed from a crosslinked rubber, of the components included in the tire, is measured in accordance with the standards of JIS K6394 using a viscoelasticity spectrometer. The measurement conditions are as follows.
Initial strain = 10%
Dynamic strain = ±1%
Frequency = 10 Hz
Mode = tensile mode
Temperature = 70°C

In this measurement, a test piece (a length of 40 mm × a width of 4 mm × a thickness of 1 mm) is sampled from the tire such that the length direction of the test piece is caused to coincide with the circumferential direction of the tire. If a test piece cannot be sampled from the tire, a test piece is sampled from the above-described rubber sheet. The loss tangent in the present invention is represented as a loss tangent at 70°C.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Findings on Which Present Invention Is Based]

Each bead portion of a tire includes a turned-up portion of a carcass ply. Strain tends to be concentrated on an end of the turned-up portion. In the tire, deformation and restoration are repeated. At the end of the turned-up portion, damage (ply turn-up loosening; PTL) that a carcass cord is peeled from a rubber is considered to occur. As described above, a large load acts on each bead portion of a heavy duty tire. The risk of occurrence of PTL is higher than that of a tire for a passenger car.

To suppress occurrence of PTL and improve durability, it is considered to provide a fiber reinforcement layer at each bead portion of a heavy duty tire that is expected to be used under severe conditions. The fiber reinforcement layer is normally composed of two reinforcement plies and placed so as to cover an end of a turned-up portion.

Each bead portion of the tire includes a chafer. The chafer comes into contact with a rim and thus is formed from a crosslinked rubber having a relatively high modulus. In the case where the bead portion has a fiber reinforcement layer, the chafer is located between the fiber reinforcement layer and the rim. The fiber reinforcement layer is in contact with the chafer in a region where shear strain is great, and thus loosening is considered to occur between the fiber reinforcement layer and the chafer before the above-described PTL occurs. The loosening influences the durability of the tire.

From the viewpoint of consideration for the environment, weight reduction is required for tires. In the case where the fiber reinforcement layer is composed of one reinforcement ply in order to achieve weight reduction, shear strain may be concentrated between the fiber reinforcement layer and the chafer, increasing the risk of occurrence of loosening.

Therefore, the present inventor has conducted a thorough study for obtaining a heavy duty tire that can achieve weight reduction while maintaining good durability, and has completed the present invention described below.

### [Outline of Embodiment of Present Invention]

The present invention is directed to a heavy duty tire including a pair of beads, a carcass extending on and between the pair of beads, a pair of sidewalls located axially outward of the carcass, a pair of chafers each located radially inward of the sidewall and configured to come into contact with a rim, and a pair of reinforcement layers each located between the carcass and the chafer, wherein each of the beads includes a core and an apex located radially outward of the core, the carcass includes a carcass ply, the carcass ply includes a ply body extending between the pair of beads and a pair of turned-up portions connected to the ply body and turned up around the beads, each of the reinforcement layers includes a fiber reinforcement layer located axially outward of the turned-up portion, the fiber reinforcement layer is composed of one fiber reinforcement ply including a large number of fiber reinforcement cords aligned with each other, the fiber reinforcement cords are organic fiber cords, each sidewall and each chafer are joined at a boundary extending between a radially inner end of the sidewall and a radially outer end of the chafer, the chafer covers the radially inner end of the sidewall, and the sidewall is softer than the chafer.

The heavy duty tire of the present invention can achieve weight reduction while maintaining good durability. The mechanism by which the tire achieves this effect has not been clarified but is inferred as follows.

The reinforcement layer located between the carcass and the chafer includes a fiber reinforcement layer, and the fiber reinforcement layer is placed axially outward of the turned-up portion. The fiber reinforcement layer constrains the turned-up portion. The fiber reinforcement layer can contribute to reducing the risk of occurrence of PTL. The fiber reinforcement layer is composed of one fiber reinforcement ply. The fiber reinforcement layer is lighter than a conventional fiber reinforcement layer composed of a plurality of fiber reinforcement plies. The fiber reinforcement layer can contribute to weight reduction of the tire.

The sidewall and the chafer are joined at the boundary extending between the radially inner end of the sidewall and the radially outer end of the chafer, and the chafer covers the radially inner end of the sidewall. Accordingly, the sidewall is placed between the fiber reinforcement layer and the chafer. The sidewall is softer than the chafer. The sidewall alleviates shear strain generated between the fiber reinforcement layer and the chafer. Even though the fiber reinforcement layer is composed of one fiber reinforcement ply, occurrence of loosening due to shear strain generated between the fiber reinforcement layer and the chafer, which is observed in conventional tires, is suppressed. The tire can achieve weight reduction while maintaining good durability.

Preferably, a line segment connecting the radially inner end of the sidewall and the radially outer end of the chafer is a boundary reference line segment, and an entirety of the boundary is located axially inward of the boundary reference line segment. In this case, the sidewall can effectively contribute to alleviating shear strain generated between the fiber reinforcement layer and the chafer. Occurrence of loosening due to shear strain is suppressed. The tire can maintain good durability.

Preferably, the core has a bottom surface located so as to face a seat of the rim, an axially outer end of the bottom surface is a reference point of the core, and the inner end of the sidewall is located radially outward of the reference point of the core. In this case, the sidewall is prevented from being placed in a zone where contact pressure between the tire and the rim is maximum. Occurrence of damage such as chafer cracking and rim chafing is suppressed. The sidewall can effectively contribute to alleviating shear strain generated between the fiber reinforcement layer and the chafer. The tire can maintain good durability.

Preferably, the chafer has a recess on a contact surface with the rim, and the recess is located axially outward of the core. In this case, strain generated when the rim comes into contact with the chafer is reduced. The rim is fitted into the recess, and thus the movement of a bead portion is suppressed. Occurrence of loosening due to shear strain generated between the fiber reinforcement layer and the chafer, and occurrence of PTL are effectively suppressed. The tire can maintain good durability.

More preferably, a shape of the recess is represented by an arc in a meridian cross-section of the tire, and the arc has a radius of 20 mm or more and 30 mm or less. In this case, the rim is sufficiently fitted into the recess, and thus the movement of the bead portion is effectively suppressed. Occurrence of loosening due to shear strain generated between the fiber reinforcement layer and the chafer, and occurrence of PTL are effectively suppressed. The tire can maintain good durability.

More preferably, a straight line passing through a midpoint of the recess and extending in an axial direction is a recess reference line, and the radially inner end of the sidewall is included in the recess reference line or is located radially outward of the recess reference line. In this case, the boundary between the sidewall and the chafer is located at an appropriate position. Accordingly, the influence of the sidewall on the stiffness of a portion that comes into contact with the rim is suppressed. The stiffness of the portion that comes into contact with the rim is appropriately maintained, and thus the tire can reduce the risk of occurrence of damage such as chafer cracking and rim chafing. The tire can maintain good durability.

Preferably, the radially outer end of the chafer is located radially inward of an end of the turned-up portion. In this case, the boundary between the sidewall and the chafer is located away from a maximum width position of the tire. Accordingly, the tire can reduce the risk of occurrence of chafer cracking. The tire can maintain good durability.

Preferably, a distance in a radial direction from a bead base line to the radially outer end of the chafer is 18 mm or more. In this case, the boundary between the sidewall and the chafer is located at an appropriate position. Accordingly, the tire can reduce the risk of occurrence of rim chafing. The tire can maintain good durability.

Preferably, a loss tangent of the sidewall is lower than a loss tangent of the chafer. In this case, occurrence of damage due to heat generation in the sidewall is suppressed. The tire can maintain good durability.

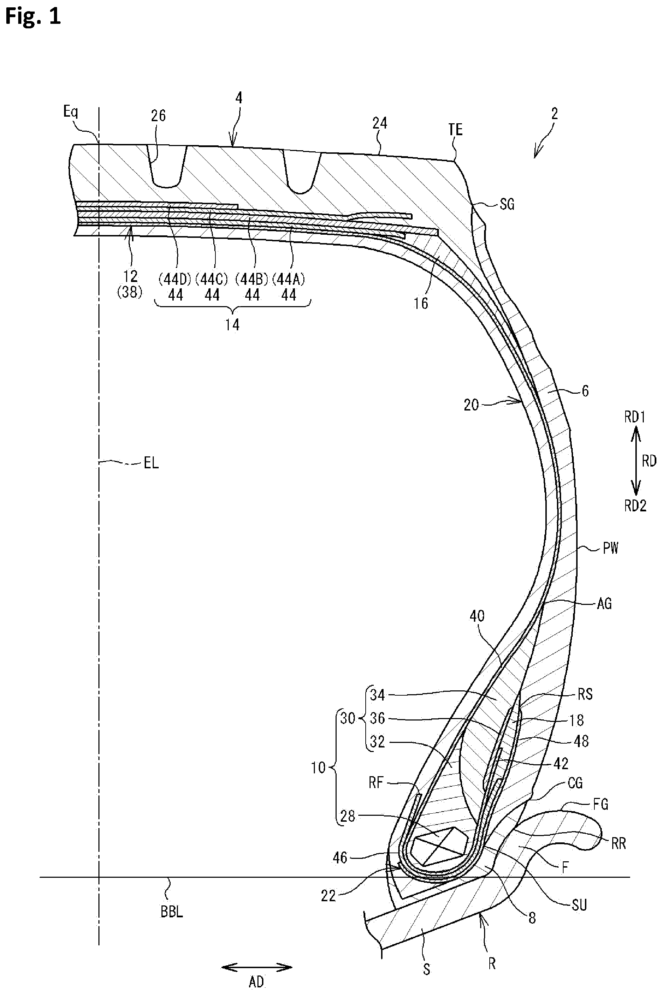

As described above, according to the present invention, a heavy duty tire that can achieve weight reduction while maintaining good durability is obtained. This will be described in detail below with a heavy duty tire 2 shown in FIG. 1 as an example.

### [Details of Embodiment of Present Invention]

FIG. 1 shows a part of a heavy duty tire 2 according to an embodiment of the present invention. The tire 2 is mounted to a vehicle such as a truck or a bus.

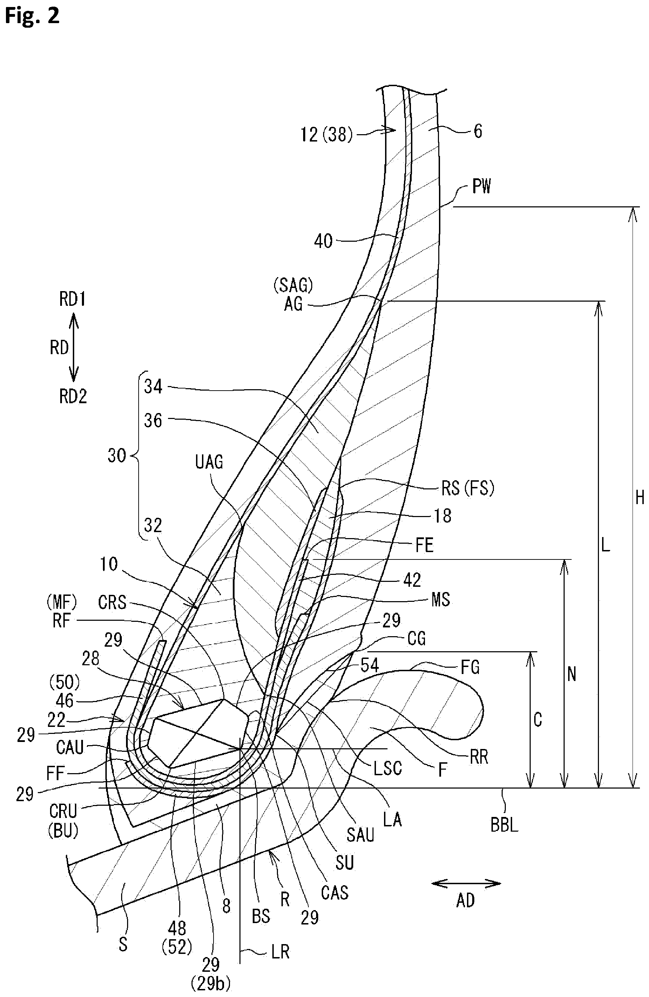

FIG. 1 shows a part of a cross-section (hereinafter referred to as meridian cross-section) of the tire 2 along a plane including the rotation axis of the tire 2. FIG. 2 shows a part of the cross-section shown in FIG. 1. FIG. 2 shows a bead portion B of the tire 2. A direction indicated by a double-headed arrow AD is the axial direction of the tire 2. The axial direction of the tire 2 means a direction parallel to the rotation axis of the tire 2. A direction indicated by a double-headed arrow RD is the radial direction of the tire 2. A direction perpendicular to the surface of the drawing sheet of FIG. 1 is the circumferential direction of the tire 2. An alternate long and short dash line EL extending in the radial direction represents the equator plane of the tire 2.

In the axial direction, a direction away from the equator plane EL corresponds to the axially outer side of the tire 2, and a direction approaching the equator plane EL corresponds to the axially inner side of the tire 2. A direction indicated by an arrow RD1 corresponds to the radially outer side of the tire 2, and a direction indicated by an arrow RD2 corresponds to the radially inner side of the tire 2.

The tire 2 shown in FIGS. 1 and 2 is in a state of being fitted on a rim R (standardized rim). A solid line BBL extending in the axial direction is a bead base line. The bead base line BBL is a line that defines the rim diameter (see JATMA or the like) of the rim R.

The rim R includes a seat S and a flange F. The bead portion B is placed on the seat S and pressed against the flange F. A position indicated by reference character FG is a radially outer end of the rim R.

The tire 2 includes a tread 4, a pair of sidewalls 6, a pair of chafers 8, a pair of beads 10, a carcass 12, a belt 14, a pair of cushion layers 16, a pair of interlayer strips 18, an inner liner 20, and a pair of reinforcement layers 22.

The tread 4 is located radially outward of the carcass 12. The tread 4 has a tread surface 24. The tire 2 comes into contact with a road surface at the tread surface 24. Grooves 26 are formed on the tread 4.

A position indicated by reference character Eq is an equator. The equator Eq is the intersection of the tread surface 24 and the equator plane EL. In the case where there is a groove 26 on the equator plane EL, an equator is specified based on a virtual tread surface obtained on the assumption that no groove 26 is present thereon. The distance in the radial direction, from the bead base line BBL to the equator Eq, obtained in the tire 2 in the standardized state is the cross-sectional height (see JATMA or the like) of the tire 2.

A position indicated by reference character TE is an end of the tread surface 24. In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

The tread 4 is formed from a crosslinked rubber. Although not shown, the tread 4 includes a base portion and a cap portion. The base portion is formed from a crosslinked rubber that has low heat generation properties. The cap portion is located radially outward of the base portion. The cap portion is formed from a crosslinked rubber for which wear resistance and grip performance are taken into consideration. The cap portion has the tread surface 24.

Each sidewall 6 is connected to an end portion of the tread 4. The sidewall 6 is located axially outward of the carcass 12. The sidewall 6 is formed from a crosslinked rubber. The 100% modulus of the sidewall 6 is 1.5 MPa or more and 2.3 MPa or less. The loss tangent of the sidewall 6 is 0.02 or more and 0.06 or less.

A position indicated by reference character PW is an axially outer end of the tire 2 (hereinafter referred to as outer end PW). In the case where decorations such as patterns and letters are present on the outer surface of the tire 2, the outer end PW is specified on the basis of a virtual outer surface obtained on the assumption that the decorations are not present thereon. The tire 2 has a maximum width at the outer end PW. The outer end PW is also referred to as maximum width position. The distance in the axial direction, from a first outer end PW to a second outer end PW (not shown), obtained in the tire 2 in the standardized state is the cross-sectional width (see JATMA or the like) of the tire 2.

A radially outer end SG of the sidewall 6 of the tire 2 is located radially outward of the maximum width position PW. A radially inner end SU of the sidewall 6 is located radially inward of the maximum width position PW. The sidewall 6 is placed so as to straddle the maximum width position PW. The inner end SU of the sidewall 6 is located radially inward of an end FE of a turned-up portion 42 described later. The inner end SU of the sidewall 6 is located radially inward of an outer end FG of the rim R.

In FIG. 2, a length indicated by a double-headed arrow H is the distance in the radial direction from the bead base line BBL to the maximum width position PW. The distance H in the radial direction is also referred to as radial height of the maximum width position PW.

In the tire 2 in the standardized state, the ratio of the radial height H of the maximum width position PW to the cross-sectional height is 0.40 or more and 0.60 or less.

Each chafer 8 is located radially inward of the sidewall 6. The chafer 8 comes into contact with the rim R. The chafer 8 is formed from a crosslinked rubber for which wear resistance is taken into consideration. The 100% modulus of the chafer 8 is 5.8 MPa or more and 7.2 MPa or less. Although not described in detail, the loss tangent of the chafer 8 is higher than that of the sidewall 6.

A radially outer end CG of the chafer 8 is located radially outward of the inner end SU of the sidewall 6. The outer end CG of the chafer 8 is located radially outward of the outer end FG of the rim R. In FIG. 2, a length indicated by a double-headed arrow C is the distance in the radial direction from the bead base line BBL to the radially outer end CG of the chafer 8. The distance C in the radial direction is also referred to as radial height of the chafer 8. A position indicated by reference character RR is an outer end of a contact surface between the rim R and the tire 2. The position RR is also referred to as separation point. The separation point RR is specified in the tire 2 in the standardized state.

Each bead 10 is located radially inward of the sidewall 6. The bead 10 is located axially inward of the sidewall 6. The bead 10 is located axially inward of the chafer 8.

The bead 10 includes a core 28 and an apex 30.

The core 28 extends in the circumferential direction. In FIG. 2, a position indicated by reference character CRS is a radially outer end of the core 28. A position indicated by reference character CRU is a radially inner end of the core 28. A position indicated by reference character CAS is an axially outer end of the core 28. A position indicated by reference character CAU is an axially inner end of the core 28.

Although not shown, the core 28 includes a wound wire made of steel. A cross-sectional shape of the core 28 is shaped by winding the wire in a regular manner. Accordingly, in a cross-section of the core 28, cross-sectional units each including a plurality of wire cross-sections aligned substantially in the axial direction are stacked in a plurality of stages substantially in the radial direction. The core 28 of the tire 2 has a hexagonal cross-sectional shape. The core 28 may have a quadrangular cross-sectional shape. In the present invention, the cross-sectional shape of the core 28 is determined based on a shape represented by a line that circumscribes the cross-section of the core 28, also in consideration of the presence of steps formed due to misalignment of the wire cross-sections.

The core 28 of the tire 2 generally has six side surfaces 29. For example, as shown in FIG. 2, one side surface 29b out of the six side surfaces 29 is located so as to face the seat S of the rim R. In the present invention, among the plurality of side surfaces 29 formed on the core 28, the side surface 29b located so as to face the seat S of the rim R is a bottom surface of the core 28. The core 28 has the bottom surface 29b located so as to face the seat S of the rim R.

In FIG. 2, reference character BU denotes a vertex formed by the bottom surface 29b and the side surface 29 located on the axially inner side out of the two side surfaces 29 located adjacent to the bottom surface 29b. The vertex BU is an axially inner end of the bottom surface 29b and is also the above-described radially inner end CRU of the core 28. Reference character BS denotes a vertex formed by the bottom surface 29b and the side surface 29 located on the axially outer side out of the two side surfaces 29 located adjacent to the bottom surface 29b. The vertex BS is an axially outer end of the bottom surface 29b and is also referred to as reference point of the core 28. In FIG. 2, a solid line LA is a straight line passing through the reference point BS and extending in the axial direction and is referred to as first core reference line. A solid line LR is a straight line passing through the reference point BS and extending in the radial direction and is referred to as second core reference line.

The apex 30 is located radially outward of the core 28. The apex 30 extends radially outward from the core 28. The apex 30 is tapered outward. A radially outer end AG of the apex 30 is located radially inward of the maximum width position PW.

In FIG. 2, a length indicated by a double-headed arrow L is the distance in the radial direction from the bead base line BBL to the outer end AG of the apex 30. The distance L in the radial direction is also referred to as radial height of the apex 30.

In the tire 2, from the viewpoint of well balancing the stiffness of the bead portion B and bending of the tire 2, the ratio (L/H) of the radial height L of the apex 30 to the radial height H of the maximum width position PW is set within the range of 0.55 or more and 0.95 or less.

The apex 30 includes an inner apex 32 and an outer apex 34. The inner apex 32 is located radially outward of the core 28. The outer apex 34 is located radially outward of the inner apex 32.

The inner apex 32 is tapered outward. A radially outer end UAG of the inner apex 32 is located radially outward of the outer end CG of the chafer 8. The inner apex 32 is formed from a crosslinked rubber. The inner apex 32 is harder than the chafer 8. Specifically, the ratio of the 100% modulus of the inner apex 32 to the 100% modulus of the chafer 8 is 1.5 or more and 2.3 or less.

The outer apex 34 is thick around the outer end UAG of the inner apex 32. The outer apex 34 is tapered inward and tapered outward from the thick portion thereof.

A radially inner end SAU of the outer apex 34 is located radially inward of the outer end FG of the rim R. A radially outer end SAG of the outer apex 34 is also the outer end AG of the apex 30. The outer apex 34 is formed from a crosslinked rubber. The outer apex 34 is softer than the chafer 8. Specifically, the ratio of the 100% modulus of the outer apex 34 to the 100% modulus of the chafer 8 is 0.38 or more and 0.65 or less.

The apex 30 of the tire 2 further includes an edge strip 36. The edge strip 36 is located axially outward of the outer apex 34 and forms a part of the outer surface of the apex 30. The edge strip 36 is located between the outer end SAG and the inner end SAU of the outer apex 34 in the radial direction. The edge strip 36 is formed from a crosslinked rubber. The edge strip 36 is softer than the chafer 8 and harder than the outer apex 34.

The carcass 12 is located inward of the tread 4, the pair of sidewalls 6, and the pair of chafers 8. The carcass 12 extends on and between the pair of beads 10. The carcass 12 of the tire 2 has a radial structure.

The carcass 12 includes at least one carcass ply 38. The carcass 12 of the tire 2 is composed of one carcass ply 38. The carcass ply 38 is turned up around each bead 10.

The carcass ply 38 includes a ply body 40 and a pair of turned-up portions 42. The ply body 40 extends between the pair of beads 10. Each turned-up portion 42 is connected to the ply body 40 and turned up around the bead 10. The turned-up portion 42 of the tire 2 is turned up around the bead 10 from the inner side toward the outer side in the axial direction. The end FE of the turned-up portion 42 is located radially inward of the outer end UAG of the inner apex 32. The end FE of the turned-up portion 42 is located between the outer end and the inner end of the edge strip 36 in the radial direction. The end FE of the turned-up portion 42 is in contact with the edge strip 36.

The carcass ply 38 includes a large number of carcass cords aligned with each other. Although not shown, these carcass cords are covered with a topping rubber. Each carcass cord intersects the equator plane EL. An angle of the carcass cord with respect to the equator plane EL is 70° or more and 90° or less. Each carcass cord of the tire 2 is a steel cord.

In FIG. 2, a length indicated by a double-headed arrow N is the distance in the radial direction from the bead base line BBL to the end FE of the turned-up portion 42. The distance N in the radial direction is also referred to as radial height of the turned-up portion 42. The ratio (N/H) of the radial height N of the turned-up portion 42 to the radial height H of the maximum width position PW is set within the range of 0.25 or more and 0.45 or less.

The belt 14 is located radially outward of the carcass 12. The belt 14 is located radially inward of the tread 4. The belt 14 includes at least two belt plies 44 aligned in the radial direction. The belt 14 of the tire 2 includes four belt plies 44. The four belt plies 44 are, from the radially inner side, a first belt ply 44A, a second belt ply 44B, a third belt ply 44C, and a fourth belt ply 44D. The second belt ply 44B has a widest width, and the fourth belt ply 44D has a narrowest width.

Although not shown, each belt ply 44 includes a large number of belt cords aligned with each other. These belt cords are covered with a topping rubber. Each belt cord is inclined with respect to the equator plane EL. Each belt cord of the tire 2 is a steel cord.

Each cushion layer 16 is located between the belt 14 and the carcass 12 at the end of the belt 14. The cushion layer 16 is formed from a soft crosslinked rubber.

Each interlayer strip 18 is located between the sidewall 6 and the apex 30 (specifically, the outer apex 34) in the axial direction. The outer end of the interlayer strip 18 is located radially outward of the outer end of the edge strip 36. The interlayer strip 18 covers the end FE of the turned-up portion 42 together with the edge strip 36. On the axially outer side of the turned-up portion 42, the interlayer strip 18 covers the end located on the outer surface side of the tire 2 (second end RS described later) out of two ends of the reinforcement layer 22, together with the sidewall 6.

The interlayer strip 18 is formed from a crosslinked rubber. The interlayer strip 18 is softer than the chafer 8 and harder than the outer apex 34. The interlayer strip 18 has stiffness substantially equal to the stiffness of the edge strip 36. The fact that the interlayer strip 18 has stiffness substantially equal to the stiffness of the edge strip 36 means that the ratio of the 100% modulus of the interlayer strip 18 to the 100% modulus of the edge strip 36 is in the range of 0.8 or more and 1.2 or less.

The inner liner 20 is located inward of the carcass 12. The inner liner 20 is joined to the inner surface of the carcass 12 via an insulation (not shown) formed from a crosslinked rubber. The inner liner 20 forms an inner surface of the tire 2. The inner liner 20 is formed from a crosslinked rubber that has an excellent air blocking property.

Each reinforcement layer 22 is located between the carcass 12 and the chafer 8. The reinforcement layer 22 is turned up around the bead 10 along the carcass 12. The reinforcement layer 22 is placed so as to wrap a radially inner portion of the bead 10 from the radially inner side of the carcass 12.

An end on the inner surface side of the tire 2 (hereinafter referred to as first end RF) of the reinforcement layer 22 is located between the inner liner 20 and the ply body 40 on the radially inner side of the outer end UAG of the inner apex 32. An end on the outer surface side of the tire 2 (hereinafter referred to as second end RS) of the reinforcement layer 22 is located between the apex 30 and the sidewall 6 on the radially inner side of the outer end AG of the apex 30. The second end RS is located radially outward of the first end RF.

The reinforcement layer 22 of the tire 2 is a cord reinforcement layer including a large number of reinforcement cords aligned with each other. The reinforcement layer 22 includes a metal reinforcement layer 46 and a fiber reinforcement layer 48.

The metal reinforcement layer 46 is located between the carcass 12 and the fiber reinforcement layer 48. The metal reinforcement layer 46 is turned up around the bead 10 along the carcass 12. An end on the inner surface side of the tire 2 (hereinafter referred to as first end MF) of the metal reinforcement layer 46 is the first end RF of the reinforcement layer 22. An end on the outer surface side of the tire 2 (hereinafter referred to as second end MS) of the metal reinforcement layer 46 is located between the turned-up portion 42 and the fiber reinforcement layer 48. The second end MS of the metal reinforcement layer 46 is located radially inward of the end FE of the turned-up portion 42. In the tire 2, the second end MS of the metal reinforcement layer 46 is located radially outward of the first end MF. The second end MS may be located radially inward of the first end MF. The position in the radial direction of the second end MS may coincide with the position in the radial direction of the first end MF.

The metal reinforcement layer 46 includes at least one metal reinforcement ply 50. The metal reinforcement layer 46 of the tire 2 is composed of one metal reinforcement ply 50.

The metal reinforcement ply 50 includes a large number of metal reinforcement cords aligned with each other. Although not shown, these metal reinforcement cords are covered with a topping rubber. The material of each metal reinforcement cord of the tire 2 is steel. The metal reinforcement cord is a steel cord. The metal reinforcement layer 46 is also referred to as steel reinforcement layer, and the metal reinforcement ply 50 is also referred to as steel reinforcement ply.

The fiber reinforcement layer 48 is located axially outward of the turned-up portion 42. In the tire 2, the reinforcement layer 22 is located between the carcass 12 and the chafer 8, and the metal reinforcement layer 46 is located between the carcass 12 and the fiber reinforcement layer 48. The fiber reinforcement layer 48 of the tire 2 is located between the metal reinforcement layer 46 and the chafer 8. On the axially outer side of the turned-up portion 42, the fiber reinforcement layer 48 is located between the metal reinforcement layer 46 and the sidewall 6. On the radially outer side of the second end MS of the metal reinforcement layer 46, the fiber reinforcement layer 48 is located between the interlayer strip 18 and the sidewall 6.

An end on the inner surface side of the tire 2 (hereinafter referred to as first end FF) of the fiber reinforcement layer 48 is located radially inward of the first end MF of the metal reinforcement layer 46. The first end FF of the fiber reinforcement layer 48 of the tire 2 is located radially inward of the axially inner end CAU of the core 28 and is located axially inward of the radially inner end CRU of the core 28. An end on the outer surface side of the tire 2 (hereinafter referred to as second end FS) of the fiber reinforcement layer 48 is the second end RS of the reinforcement layer 22. The second end FS of the fiber reinforcement layer 48 of the tire 2 is located between the outer end AG of the apex 30 and the end FE of the turned-up portion 42 in the radial direction. More specifically, the second end FS is located between the radially outer end of the interlayer strip 18 and the end FE of the turned-up portion 42 in the radial direction.

The fiber reinforcement layer 48 of the tire 2 includes a fiber reinforcement ply 52. The fiber reinforcement ply 52 includes a large number of fiber reinforcement cords aligned with each other. Although not shown, these fiber reinforcement cords are covered with a topping rubber. Each fiber reinforcement cord of the tire 2 is a cord formed from an organic fiber (hereinafter referred to as organic fiber cord). The fiber reinforcement layer 48 is composed of one fiber reinforcement ply 52 including a large number of fiber reinforcement cords aligned with each other, and the fiber reinforcement cords are organic fiber cords.

Examples of organic fiber cords that can be used as the fiber reinforcement cords include nylon fiber cords, rayon fiber cords, polyester fiber cords, and aramid fiber cords. Among them, nylon fiber cords are preferable. The fiber reinforcement layer 48 in which the organic fiber cords are nylon fiber cords are also referred to as nylon fiber reinforcement layer, and the fiber reinforcement ply 52 is also referred to as nylon fiber reinforcement ply.

As described above, the reinforcement layer 22 located between the carcass 12 and the chafer 8 includes the fiber reinforcement layer 48. The fiber reinforcement layer 48 is placed axially outward of the turned-up portion 42. The fiber reinforcement layer 48 constrains the turned-up portion 42. The fiber reinforcement layer 48 can contribute to reducing the risk of occurrence of PTL. The fiber reinforcement layer 48 of the tire 2 is composed of one fiber reinforcement ply 52. The fiber reinforcement layer 48 is lighter than a conventional fiber reinforcement layer composed of a plurality of fiber reinforcement plies. The fiber reinforcement layer 48 can contribute to weight reduction of the tire 2.

The sidewall 6 and the chafer 8 are joined at a boundary 54 extending between the radially inner end SU of the sidewall 6 and the radially outer end CG of the chafer 8. The chafer 8 covers the radially inner end SU of the sidewall 6. Accordingly, the sidewall 6 is placed between the fiber reinforcement layer 48 and the chafer 8. The sidewall 6 is softer than the chafer 8. The sidewall 6 alleviates shear strain generated between the fiber reinforcement layer 48 and the chafer 8. Even though the fiber reinforcement layer 48 is composed of one fiber reinforcement ply 52, occurrence of loosening due to shear strain generated between the fiber reinforcement layer 48 and the chafer 8, which is observed in conventional tires, is suppressed. The tire 2 can achieve weight reduction while maintaining good durability.

In FIG. 2, a solid line LSC is a line segment connecting the radially inner end SU of the sidewall 6 and the radially outer end CG of the chafer 8. The line segment LSC is a portion, between the inner end SU and the outer end CG, of a straight line passing through the inner end SU and the outer end CG and is also referred to as boundary reference line segment.

The entirety of the boundary 54 between the sidewall 6 and the chafer 8 in the tire 2 is located radially outward of the boundary reference line segment LSC. In other words, the entirety of the boundary 54 is located axially inward of the boundary reference line segment LSC. Accordingly, the sidewall 6 can effectively contribute to alleviating shear strain generated between the fiber reinforcement layer 48 and the chafer 8. Occurrence of loosening due to shear strain is suppressed. The tire 2 can maintain good durability. From this viewpoint, it is preferable that the entirety of the boundary 54 between the sidewall 6 and the chafer 8 is located axially inward of the boundary reference line segment LSC.

As described above, the sidewall 6 and the chafer 8 are joined at the boundary 54 extending between the inner end SU of the sidewall 6 and the outer end CG of the chafer 8. The inner end SU of the sidewall 6 is the inner end of the boundary 54, and the outer end CG of the chafer 8 is the outer end of the boundary 54. As shown in FIG. 2, the outer end CG of the boundary 54 is located radially outward of the separation point RR, and the inner end SU of the boundary 54 is located radially inward of the separation point RR.

The boundary 54 has an inwardly curved shape. The flange F of the rim R also has a shape that is curved in the same direction, so that the chafer 8 located between the sidewall 6 and the rim R can have a substantially uniform thickness. When the rim R comes into contact with the chafer 8, the load acting on the boundary 54 is distributed over the entirety of the boundary 54. Accordingly, the sidewall 6 can effectively contribute to alleviating shear strain generated between the fiber reinforcement layer 48 and the chafer 8. Occurrence of loosening due to shear strain is suppressed. The tire 2 can maintain good durability. From this viewpoint, it is preferable that the boundary 54 between the sidewall 6 and the chafer 8 has an inwardly curved shape. In this case, it is more preferable that the shape of the boundary 54 is represented by an arc.

When the tire 2 is fitted on the rim R, the tire 2 comes into contact with the rim R. Accordingly, contact pressure is generated between the tire 2 and the rim R. In the tire 2 in the standardized state, the zone from the first core reference line LA to the second core reference line LR corresponds to a zone where the contact pressure is maximum. If, for example, the soft sidewall 6 is positioned in this zone, the risk of occurrence of damage such as chafer cracking and rim chafing may increase.

As shown in FIG. 2, in the tire 2, the inner end SU of the sidewall 6 is located radially outward of the above-described reference point BS of the core 28. Accordingly, the sidewall 6 is prevented from being placed in the zone where the contact pressure is maximum. The tire 2 suppresses occurrence of damage such as chafer cracking and rim chafing. The sidewall 6 can stably exhibit its function. That is, the sidewall 6 can effectively contribute to alleviating shear strain generated between the fiber reinforcement layer 48 and the chafer 8. Occurrence of loosening due to shear strain is suppressed. The tire 2 can maintain good durability. From this viewpoint, it is preferable that the inner end SU of the sidewall 6 is located radially outward of the reference point BS of the core 28.

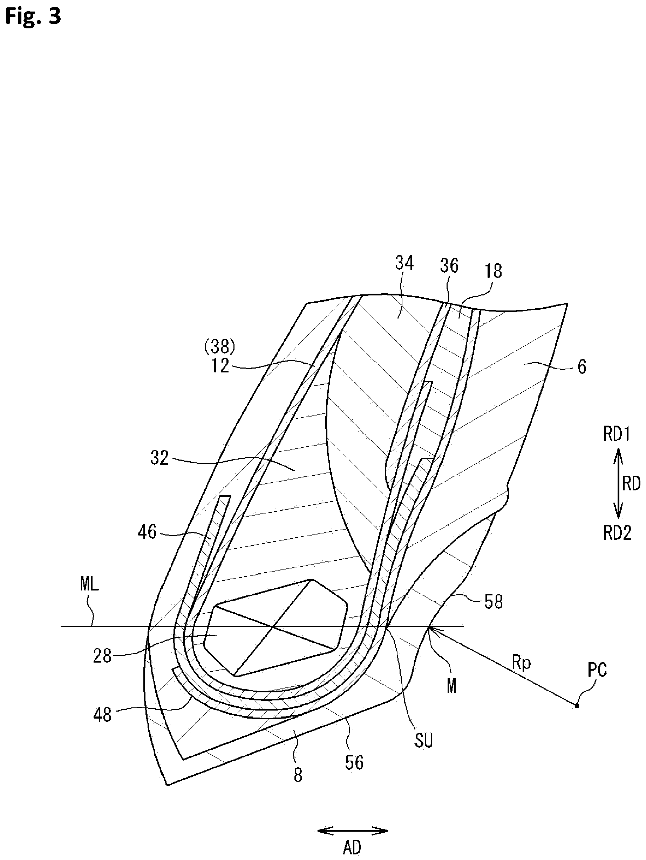

FIG. 3 shows a cross-section of the bead portion B. This cross-section is a part of the meridian cross-section of the tire 2 along a plane including the rotation axis. The bead portion B of the tire 2 shown in FIG. 3 is not fitted on the rim R.

As described above, the chafer 8 comes into contact with the rim R. The chafer 8 has a contact surface 56 with the rim R. As shown in FIG. 3, the contact surface 56 is provided with a recess 58.

The chafer 8 of the tire 2 has the recess 58 on the contact surface 56 with the rim R. The recess 58 overlaps the core 28 in the axial direction. When the tire 2 is fitted on the rim R, the rim R (specifically, the flange F of the rim R) is fitted into the recess 58. Accordingly, strain generated when the rim R comes into contact with the chafer 8 is reduced. Since the rim R is fitted into the recess 58, the movement of the bead portion B is suppressed. Occurrence of loosening due to shear strain generated between the fiber reinforcement layer 48 and the chafer 8, and occurrence of PTL are effectively suppressed. The tire 2 can maintain good durability. From this viewpoint, it is preferable that the chafer 8 has the recess 58 on the contact surface 56 with the rim R and the recess 58 is located axially outward of the core 28.

In the cross-section shown in FIG. 3, the shape of the recess 58 is represented by a single arc. In FIG. 3, an arrow Rp indicates the radius of the arc representing the shape of the recess 58. A position indicated by reference character PC is the center of this arc.

In the tire 2, the shape of the recess 58 is not particularly limited, as long as the rim R is fitted into the recess 58 and the movement of the bead portion B is suppressed. However, from the viewpoint that the rim R is sufficiently fitted into the recess 58 and the movement of the bead portion B is effectively suppressed, it is preferable that the shape of the recess 58 is represented by an arc in the meridian cross-section of the tire 2. Accordingly, occurrence of loosening due to shear strain generated between the fiber reinforcement layer 48 and the chafer 8, and occurrence of PTL are effectively suppressed. The tire 2 can maintain good durability. In the case where the shape of the recess 58 is represented by an arc, from the viewpoint of more effectively suppressing occurrence of loosening and PTL, the radius Rp of the arc representing the shape of the recess 58 is preferably 20 mm or more and 30 mm or less, and more preferably 20 mm or more and 25 mm or less.

In FIG. 3, a position indicated by reference character M is the midpoint of the recess 58. The midpoint M is represented as the position at which the length of a contour line representing the shape of the recess 58 is halved. In the case of the tire 2, since the shape of the recess 58 is represented by an arc, the position at which the length of this arc is halved is the midpoint M of the recess 58. In FIG. 3, a solid line ML is a straight line passing through the midpoint M of the recess 58 and extending in the axial direction. In the present invention, the straight line ML is a recess reference line.

If the inner end SU of the sidewall 6 is located radially inward of the recess reference line ML, the volume of the sidewall 6 at a portion of the bead portion B that comes into contact with the rim R increases. Since the sidewall 6 is soft, the stiffness of the portion that comes into contact with the rim R decreases, so that there is a concern that the risk of occurrence of damage such as chafer cracking and rim chafing may increase.

However, the inner end SU of the sidewall 6 of the tire 2 is included in the recess reference line ML as shown in FIG. 3. In other words, the position in the radial direction of the inner end SU of the sidewall 6 coincides with the position in the radial direction of the recess reference line ML. Accordingly, the boundary 54 between the sidewall 6 and the chafer 8 is located at an appropriate position. The influence of the sidewall 6 on the stiffness of the portion that comes into contact with the rim R is suppressed. The tire 2 can appropriately maintain the stiffness of the portion that comes into contact with the rim R. The tire 2 can reduce the risk of occurrence of damage such as chafer cracking and rim chafing. The tire 2 can maintain good durability. From this viewpoint, it is preferable that the radially inner end SU of the sidewall 6 is included in the recess reference line ML or is located radially outward of the recess reference line ML.

The chafer 8 is harder than the sidewall 6. There is a concern that the risk of occurrence of chafer cracking may increase as the outer end CG of the chafer 8 approaches the maximum width position PW.

However, the outer end CG of the chafer 8 of the tire 2 is located radially inward of the end FE of the turned-up portion 42. Accordingly, the boundary 54 between the sidewall 6 and the chafer 8 is located away from the maximum width position PW of the tire 2. Accordingly, the tire 2 can reduce the risk of occurrence of chafer cracking. The tire 2 can maintain good durability. From this viewpoint, it is preferable that the outer end CG of the chafer 8 is located radially inward of the end FE of the turned-up portion 42.

The radial height C of the chafer 8 is preferably 18 mm or more. Accordingly, the boundary 54 between the sidewall 6 and the chafer 8 is located at an appropriate position. As a result, the tire 2 can reduce the risk of occurrence of rim chafing. The tire 2 can maintain good durability. From this viewpoint, the radial height C of the chafer 8 is more preferably 25 mm or more. From the viewpoint of reducing the risk of occurrence of chafer cracking and rim chafing, the radial height C of the chafer 8 is preferably 32 mm or less.

From the viewpoint that the tire 2 can maintain good durability, it is more preferable that the radially inner end SU of the sidewall 6 is included in the recess reference line ML or is located radially outward of the recess reference line ML, the radially outer end CG of the chafer 8 is located radially inward of the end FE of the turned-up portion 42, and the radial height C of the chafer 8 is 18 mm or more.

At the boundary portion between the sidewall 6 and the chafer 8, the sidewall 6 is interposed between the reinforcement layer 22 and the chafer 8. Since the sidewall 6 is softer than the chafer 8, the amount of deformation of the sidewall 6 is larger than that of the chafer 8. There is a concern that damage due to heat generation in the sidewall 6 may occur. However, the loss tangent of the sidewall 6 of the tire 2 is lower than the loss tangent of the chafer 8. Occurrence of damage due to heat generation in the sidewall 6 is suppressed. The tire 2 can maintain good durability. From this viewpoint, it is preferable that the loss tangent of the sidewall 6 is lower than the loss tangent of the chafer 8. In this case, it is preferable that the difference between the loss tangent of the chafer 8 and the loss tangent of the sidewall 6 is greater than 0 and preferably 0.04 or more.

In the bead portion B of the tire 2, the turned-up portion 42, the metal reinforcement layer 46, and the fiber reinforcement layer 48 are located axially outward of the bead 10. As described above, the turned-up portion 42 includes carcass cords, the metal reinforcement layer 46 includes metal reinforcement cords, and the fiber reinforcement layer 48 includes fiber reinforcement cords.

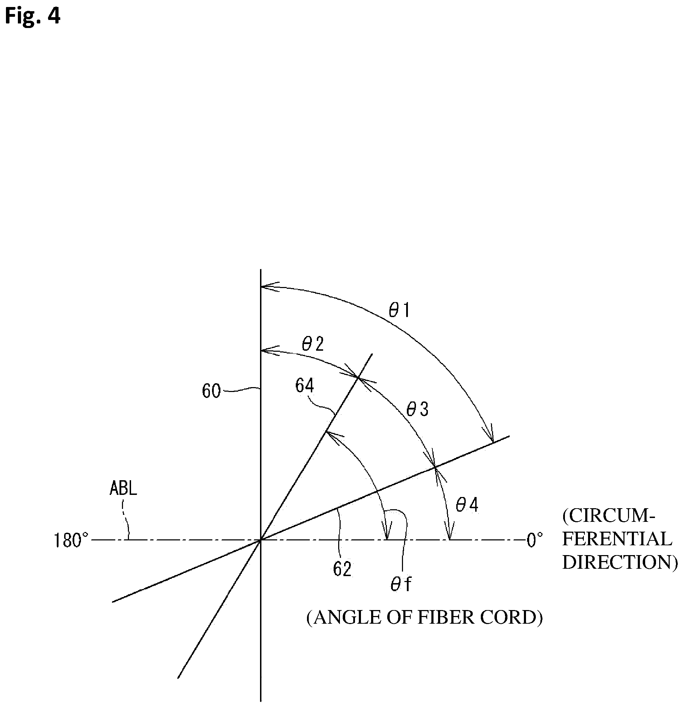

FIG. 4 illustrates a carcass cord 60, a metal reinforcement cord 62, and a fiber reinforcement cord 64 in the bead portion B. FIG. 4 is an image diagram of each cord as viewed from the axially outer side toward the bead portion B and is a diagram of each cord when developed on a plane. The arrangement configuration of the carcass cords, the metal reinforcement cords, and the fiber reinforcement cords in the bead portion B will be described with reference to FIG. 4. The turned-up portion 42, the metal reinforcement layer 46, and the fiber reinforcement layer 48 each include a large number of cords, but for convenience of description, a single cord is shown for the cords, and the arrangement configuration of the carcass cord 60, the metal reinforcement cord 62, and the fiber reinforcement cord 64 is shown such that the intersection positions of the cords coincide with each other.

In FIG. 4, the up-down direction corresponds to the radial direction of the tire 2, and the right-left direction corresponds to the circumferential direction of the tire 2. In FIG. 4, an alternate long and short dash line ABL is a straight line extending in the circumferential direction and is a reference line for specifying the inclination of each cord. The angle of each cord with respect to the circumferential direction is represented as an angle from 0 degrees to 180 degrees in a counterclockwise direction.

The carcass cord 60 shown in FIG. 4 extends in the radial direction. The metal reinforcement cord 62 is inclined with respect to the carcass cord 60. In the case of FIG. 4, the direction in which the metal reinforcement cord 62 is inclined with respect to the carcass cord 60 is a clockwise direction. The fiber reinforcement cord 64 is inclined on the same side as the metal reinforcement cord 62 with respect to the carcass cord 60. That is, in the case of FIG. 4, the direction in which the fiber reinforcement cord 64 is inclined with respect to the carcass cord 60 is the clockwise direction.

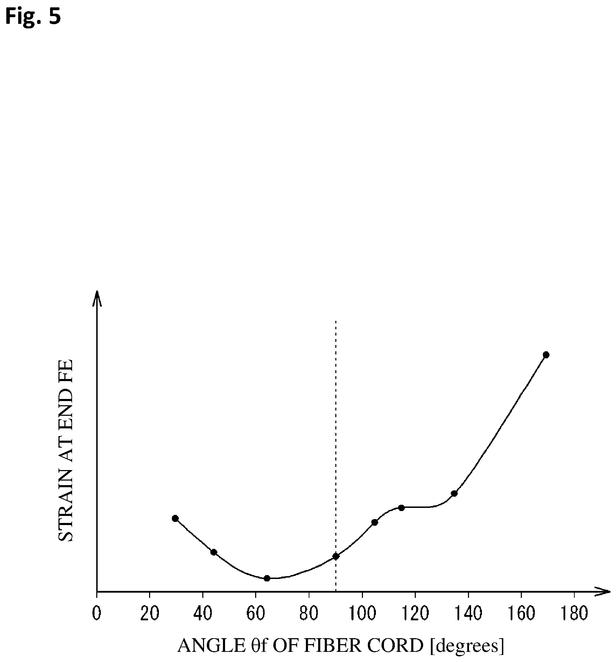

FIG. 5 is a graph showing the relationship between the angle of the fiber reinforcement cord 64 and strain at the end FE of the turned-up portion 42. Data indicating this relationship is data calculated by simulation using a finite element method (FEM). A model of the simulation is the tire 2 in which the carcass 12 is composed of one carcass ply 38, the metal reinforcement layer 46 is composed of one metal reinforcement ply 50, and the fiber reinforcement layer 48 is composed of one fiber reinforcement ply 52, based on the configuration shown in FIG. 2. The state of the tire 2 is the standardized state, and the tire size is 295/80R22.5.

The angle of the fiber reinforcement cord 64 (θf in FIG. 7) shown on the horizontal axis of the graphs in FIG. 5 is a value obtained when the circumferential direction is used as a reference.

As shown in FIG. 4, the angle (minor angle) of the metal reinforcement cord 62 when the circumferential direction is used as a reference is "θ4". In the simulation, θ4 is set to 25°. The angle θf (= θ3 + θ4) of the fiber reinforcement cord 64 is set to a value larger than θ4 (25°) and is varied up to 170° as shown in FIG. 5 in the simulation.

In FIG. 5, the case where the angle θf of the fiber reinforcement cord 64 is less than 90° is the case where the fiber reinforcement cord 64 is inclined on the same side as the metal reinforcement cord 62 with respect to the carcass cord 60, and the case where the angle θf of the fiber reinforcement cord 64 exceeds 90° is the case where the fiber reinforcement cord 64 is inclined on the side opposite to (different from) the metal reinforcement cord 62 with respect to the carcass cord 60.

As shown in FIG. 5, strain at the end FE of the turned-up portion 42 is reduced to be smaller when the angle θf is less than 90° than when the angle θf exceeds 90°. That is, from the viewpoint of more effectively suppressing occurrence of PTL, it is preferable that the fiber reinforcement cord 64 is inclined on the same side as the metal reinforcement cord 62 with respect to the carcass cord 60. In this case, the angle θf of the fiber reinforcement cord 64 is preferably 45° or more and more preferably 60° or more and 70° or less.

The inclination angle of the metal reinforcement cord 62 with respect to the carcass cord 60 is the included angle between the carcass cord 60 and the metal reinforcement cord 62. That is, the inclination angle is the angle (minor angle) formed between the carcass cord 60 and the metal reinforcement cord 62 and is defined as first angle θ1.

The inclination angle of the fiber reinforcement cord 64 with respect to the carcass cord 60 is the included angle between the carcass cord 60 and the fiber reinforcement cord 64. That is, the inclination angle is the angle (minor angle) formed between the carcass cord 60 and the fiber reinforcement cord 64 and is defined as second angle θ2.

The included angle between the metal reinforcement cord 62 and the fiber reinforcement cord 64, that is, the angle (minor angle) formed between the metal reinforcement cord 62 and the fiber reinforcement cord 64, is defined as third angle θ3.

In the case of the present embodiment, the second angle θ2 formed between the carcass cord 60 and the fiber reinforcement cord 64 is smaller than the first angle θ1 formed between the carcass cord 60 and the metal reinforcement cord 62.

As the angle (included angle) between two cords decreases, the range where one cord intersects the other cord widens, so that the reinforcing effect of the one cord on the other cord is enhanced.

In the case of the present embodiment, the second angle θ2 formed between the carcass cord 60 and the fiber reinforcement cord 64 is relatively small (smaller than θ1). Therefore, the reinforcing effect of the fiber reinforcement cord 64 on the carcass cord 60 is enhanced.

The absolute value of the difference between the second angle θ2 formed between the carcass cord 60 and the fiber reinforcement cord 64 and the third angle θ3 formed between the fiber reinforcement cord 64 and the metal reinforcement cord 62 is preferably 20° or less (|θ2 - θ3| ≤ 20°). More preferably, the absolute value of the difference between the second angle θ2 and the third angle θ3 is 15° or less (|θ2 - θ3| ≤ 15°).
As described above, in the configuration in which the second angle θ2 is relatively small and the absolute vale of the difference is 20° or less, the difference between the second angle θ2 and the third angle θ3 is small. That is, the third angle θ3 is also relatively small. The reinforcing effect of the metal reinforcement cord 62 on the carcass cord 60 and the reinforcing effect of the fiber reinforcement cord 64 on the metal reinforcement cord 62 are enhanced.

The third angle θ3 is preferably 15° or more (θ3 ≥ 15°). Owing to this configuration, a configuration in which the absolute value of the difference between the second angle θ2 and the third angle θ3 is made smaller is obtained. That is, a configuration in which the second angle θ2 is small and the third angle θ3 is also small is obtained. As an example of the angles, the first angle θ1 is 65°, the second angle θ2 is 30°, and the third angle θ3 is 35°.

The metal reinforcement cord 62 is inclined with respect to the carcass cord 60, and the fiber reinforcement cord 64 is inclined on the same side as the metal reinforcement cord 62 with respect to the carcass cord 60 (see FIG. 4). The second angle θ2 formed between the carcass cord 60 and the fiber reinforcement cord 64 is smaller than the first angle θ1 formed between the carcass cord 60 and the metal reinforcement cord 62. The absolute value of the difference between the second angle θ2 and the third angle θ3 formed between the fiber reinforcement cord 64 and the metal reinforcement cord 62 is 20° or less. The third angle θ3 is 15° or more.

The fiber reinforcement layer 48 is composed of one fiber reinforcement ply 52, but the fiber reinforcement cord 64 of the fiber reinforcement layer 48 is inclined on the same side as the metal reinforcement cord 62, so that concentration of strain on the end FE of the turned-up portion 42 is suppressed (see FIG. 5). Furthermore, the second angle θ2 is smaller than the first angle θ1, that is, the second angle θ2 is relatively small. The absolute value of the difference between the second angle θ2 and the third angle θ3 is 20° or less, and since the difference between these angles is small, the third angle θ3 is also relatively small. In particular, since the third angle θ3 is 15° or more, the configuration in which the difference is made smaller is obtained. Owing to the above, a configuration in which the second angle θ2 is small and the third angle θ3 is also small is obtained. As described above, as the angle (included angle) between two cords decreases, the range where one cord intersects the other cord widens, so that the reinforcing effect of the one cord on the other cord is enhanced. Therefore, with the above configuration, concentration of strain on the end FE of the turned-up portion 42 is suppressed, and the reinforcing effect of the fiber reinforcement cord 64 on the carcass cord 60, the reinforcing effect of the metal reinforcement cord 62 on the carcass cord 60, and the reinforcing effect of the fiber reinforcement cord 64 on the metal reinforcement cord 62 are also enhanced. Deformation of the bead portion B is suppressed, and thus, even though the fiber reinforcement layer 48 is composed of one fiber reinforcement ply 52, occurrence of loosening due to shear strain generated between the fiber reinforcement layer 48 and the chafer 8, and occurrence of PTL are effectively suppressed. The tire 2 can achieve weight reduction while maintaining good durability.

As is obvious from the above description, according to the present invention, the heavy duty tire 2 that can achieve weight reduction while maintaining good durability is obtained.

The above-described technology capable of achieving weight reduction while maintaining good durability can be applied to various tires.

## Claims

1. A heavy duty tire (2) comprising a pair of beads (10), a carcass (12) extending on and between the pair of beads (10), a pair of sidewalls (6) located axially outward of the carcass (12), a pair of chafers (8) each located radially inward of the sidewall (6) and configured to come into contact with a rim (R), and a pair of reinforcement layers (22) each located between the carcass (12) and the chafer (8), wherein
each of the beads (10) includes a core (28) and an apex (30) located radially outward of the core (28),
the carcass (12) includes a carcass ply (38),
the carcass ply (38) includes a ply body (40) extending between the pair of beads (10) and a pair of turned-up portions (42) connected to the ply body (40) and turned up around the beads (10),
each of the reinforcement layers (22) includes a fiber reinforcement layer (48) located axially outward of the turned-up portion (42),
the fiber reinforcement layer (48) is composed of one fiber reinforcement ply (52) including a large number of fiber reinforcement cords (64) aligned with each other,
the fiber reinforcement cords (64) are organic fiber cords,
each sidewall (6) and each chafer (8) are joined at a boundary (54) extending between a radially inner end (SU) of the sidewall (6) and a radially outer end (CG) of the chafer (8),
the chafer (8) covers the radially inner end (SU) of the sidewall (6), and
the sidewall (6) is softer than the chafer (8).

2. The heavy duty tire (2) according to claim 1, wherein
a line segment connecting the radially inner end (SU) of the sidewall (6) and the radially outer end (CG) of the chafer (8) is a boundary reference line segment (LSC), and
an entirety of the boundary (54) is located axially inward of the boundary reference line segment (LSC).

3. The heavy duty tire (2) according to claim 1 or 2, wherein
the core (28) has a bottom surface (29b) located so as to face a seat (S) of the rim (R),
an axially outer end of the bottom surface (29b) is a reference point (BS) of the core (28), and
the inner end (SU) of the sidewall (6) is located radially outward of the reference point (BS) of the core (28).

4. The heavy duty tire (2) according to any one of claims 1 to 3, wherein
the chafer (8) has a recess (58) on a contact surface (56) with the rim (R), and
the recess (58) is located axially outward of the core (28).

5. The heavy duty tire (2) according to claim 4, wherein
a shape of the recess (58) is represented by an arc in a meridian cross-section of the tire (2), and
the arc has a radius (Rp) of 20 mm or more and 30 mm or less.

6. The heavy duty tire (2) according to claim 4 or 5, wherein
a straight line passing through a midpoint (M) of the recess (58) and extending in an axial direction is a recess reference line (ML), and
the radially inner end (SU) of the sidewall (6) is included in the recess reference line (ML) or is located radially outward of the recess reference line (ML).

7. The heavy duty tire (2) according to any one of claims 1 to 6, wherein the radially outer end (CG) of the chafer (8) is located radially inward of an end (FE) of the turned-up portion (42).

8. The heavy duty tire (2) according to any one of claims 1 to 7, wherein a distance (C) in a radial direction from a bead base line (BBL) to the radially outer end (CG) of the chafer (8) is 18 mm or more.

9. The heavy duty tire (2) according to any one of claims 1 to 8, wherein a loss tangent of the sidewall (6) is lower than a loss tangent of the chafer (8).
